# EUROPÄISCHE PATENTSCHRIFT

(11) **EP 1 595 029 B1**
(45) Veröffentlichungstag und Bekanntmachung des Hinweises auf die Patenterteilung: **11.05.2011**
(21) Anmeldenummer: 04707518.9
(22) Anmeldetag: 03.02.2004
(51) Int. Cl.: D21H 21/40, D21H 19/82

(54) **SICHERHEITSPAPIER UND VERFAHREN ZUR HERSTELLUNG DESSELBEN**
SECURITY PAPER AND METHOD FOR THE PRODUCTION THEREOF
PAPIER DE SECURITE ET PROCEDE DE PRODUCTION ASSOCIE

(30) Priorität: 11.02.2003 DE 10305614; 13.06.2003 DE 10327083
(43) Veröffentlichungstag der Anmeldung: 16.11.2005
(73) Patentinhaber: Giesecke & Devrient GmbH, 81677 München (DE)
(72) Erfinder: HABIK, Klaus, 81245 München (DE); MENGEL, Christoph, 83607 Holzkirchen (DE); LANGER, Jörg, 81379 München (DE)
(86) Internationale Anmeldenummer: PCT/EP2004/000973
(87) Internationale Veröffentlichungsnummer: WO 2004/072378

(56) Entgegenhaltungen:
- EP-A- 1 338 430
- DE-A- 10 124 630
- US-A- 5 820 971
- US-A- 5 985 078
- US-A1- 2002 027 362
- US-A1- 2002 127 339
- US-B1- 6 491 324
- US-B1- 6 592 972

## Beschreibung

Die Erfindung betrifft ein Sicherheitspapier zur Herstellung von Wertdokumenten, wie Banknoten, Pässen, Ausweisdokumenten oder dergleichen, mit einem flächigen Substrat, das zumindest teilweise mit einer Schmutz abweisenden Schutzschicht zur Verlängerung der Lebensdauer und der Umlauffähigkeit versehen ist. Die Erfindung betrifft ferner ein Wertdokument mit einem derartigen Sicherheitspapier und ein Verfahren zur Herstellung eines solchen Sicherheitspapiers.

Wert- und Sicherheitsdrucke, wie beispielsweise Banknoten, Aktien, Anleihen, Urkunden und Gutscheine, Schecks, hochwertige Eintrittskarten, aber auch andere fälschungsgefährdete Papiere, wie Pässe oder sonstige Ausweisdokumente, werden zur Erhöhung ihrer Fälschungssicherheit oft mit aufwändigen Druckbildern versehen. Dabei werden zumindest für einige der Bildelemente technisch anspruchsvolle und nicht jedermann zugängliche Druckverfahren, wie beispielsweise Stichtiefdruck, eingesetzt.

Zusätzlich werden die Sicherheitsdrucke häufig mit so genannten Sicherheitselementen ausgestattet, die schwierig nachzuahmen sind und auch für einen Laien eine Überprüfung der Echtheit des Drucks bzw. des Dokuments ermöglichen. Solche Sicherheitselemente können beispielsweise Fenstersicherheitsfäden sein, die bereichsweise an der Oberfläche des Wertpapiers sichtbar sind, Folienapplikationen, die ein transparentes oder metallisiertes Prägehologramm aufweisen, Blindprägungen, drucktechnisch oder druck-und prägetechnisch hergestellte, so genannte "Latent Images", die unter verschiedenen Betrachtungswinkeln eine unterschiedliche Information wiedergeben, Aufdrucke, die optisch variable Pigmente enthalten und je nach Betrachtungswinkeln unterschiedliche Farbeindrücke erzeugen, oder Aufdrucke aus Metalleffektfarbe, die beispielsweise in einem Gold-, Silber- oder Bronzeton metallisch glänzen.

Ein wichtiger Bestandteil von Wertdokumenten, wie Banknoten, ist deren flächiges Substrat, das vorzugsweise überwiegend aus Baumwollpapier besteht und dessen typische Haptik auch durch die einseitige oder zweiseitige Kalandrierung beim Stahlstichdruck beeinflusst wird. Der haptische Charakter einer Banknote drückt sich hauptsächlich durch ihre Griffigkeit und ihre Biegesteifigkeit aus, außerdem weist sie beim Verformen und Knittern einen charakteristischen Klang auf.

Es ist bekannt, Wertpapiere zur Verlängerung der Lebensdauer und Umlauffähigkeit mit einer Schmutz abweisenden Schutzschicht zu versehen. Beispielsweise wird in der Druckschrift EP 0256 170 B2 vorgeschlagen, bedruckte Geldscheine mit einer Schutzschicht zu versehen, die zum größeren Teil Celluloseester oder Celluloseether und zu einem geringeren Teil mikronisiertes Wachs enthält und die vollflächig auf die Geldscheine aufgebracht wird. Das mikronisierte Wachs wird dabei durch Kneten oder Mischen mit Öl, einem Farbbindemittel oder einer Mischung daraus dispergiert. Die mit der Schutzschicht frisch bedruckten Bögen können ohne Schwierigkeiten gestapelt werden, ohne dass schwarze Farbe von einem Bogen auf den darunter liegenden Bogen abfärbt.

Aus der Druckschrift WO 00/00697 ist ein Sicherheitspapier für Banknoten mit einer Schmutz abweisenden Beschichtung bekannt, das in seinen typischen Eigenschaften, wie Bedruckbarkeit, Klang und Farbe, gegenüber einem unbeschichteten Papier trotz der Beschichtung weit gehend unverändert bleibt. Auf dem Banknotenpapier, welches aufgrund seiner Porosität eine große Oberfläche bzw. eine hohe Oberflächenrauigkeit besitzt, wird dabei eine Beschichtungszusammensetzung aufgebracht, die lediglich ein Bindemittel und keine Füllstoffe enthält. Die Zusammensetzung wird in einer solchen Schichtdicke aufgetragen, dass einerseits eine glatte Oberfläche und somit wenig Möglichkeiten zur Schmutzanlagerung entstehen, und dass andererseits die Beschichtung dünn genug ist, um die übrigen genannten Eigenschaften des Papiers nicht zu beeinträchtigen.

Den bekannten Schutzschichten ist gemein, dass kein besonders hoher Verschleißschutz besteht. Herkömmliche Schutzschichten aus Lacken auf wässriger Basis werden einem anspruchsvollen Anforderungsprofil meist nie ganz gerecht. So geht etwa eine sehr gute Schmutzabweisung und Haftungsqualität zu Lasten der Beständigkeit gegen das Eindringen von Flüssigkeit und umgekehrt. Wasserbasierte Lacke werden daher zur Zeit den hohen Anforderungen an eine Schutzschicht im Wertpapier- und insbesondere im Banknotendruck nur gerecht, wenn eine zweite Komponente in Form eines Vernetzungsmittels beigefügt wird. Da solche Vernetzungsmittel selbst hochreaktiv sind, müssen das Bedienpersonal für Gefährdungen sensibilisiert und entsprechende Schutzmaßnahmen ergriffen werden.

Aus US 5,820,971 A ist ein Sicherheitsdokument bekannt, das ein mehrschichtiges Sicherheitselement umfasst, welches Beugungsstrukturen in Form einer Reliefstruktur aufweist. Das Sicherheitsdokument besteht zumindest aus zwei Reaktionslackschichten, zwischen welchen die Beugungsstrukturen angeordnet sind. Die gemäß einer speziellen Ausführungsform das Dokumentenmaterial direkt kontaktierende erste Lackschicht besteht aus einem Reaktionslack, der irreversibel aushärtet, d.h. polymerisiert oder vernetzt.

Aus US 2002/0127339 A1 ist ein Verfahren zur Veredelung von Wertpapierdruckbogen bekannt, bei dem die Wertpapierdruckbogen teilweise und/ oder vollständig mit einem farblosen Lack beschichtet werden. Die erste, vollflächige Lackschicht dient als Schutzschicht zur Verlängerung der Lebensdauer des Wertpapierdruckbogens, eine zweite, partiell aufgebrachte (äußere) Lackschicht soll die Erkennbarkeit von Wasserzeichen-Sicherheitsmerkmalen verbessern.

Aus US 5,985,078 A ist ein Verfahren zum Dekorieren oder Beschriften einer Oberfläche mittels Laserstrahlung bekannt, bei dem zumindest eine mittels des Laserstrahls abzutragende obere Farblackschicht in einem Transferverfahren auf die Oberfläche aufgebracht wird, um so eine gleichmäßige Dicke dieser Farbschicht zu erzielen. Bei der den Kontakt mit dem Substrat herstellenden Schicht handelt es sich um eine Klebstoffschicht, die dazu dient, eine Markierung an einer Frontplatte einer Maschine aufzubringen.

Aus US 6,491,324 B1 ist ein Sicherheitsdokument mit einem Sicherheitselement bekannt, welches zumindest eine maschinell prüfbare magnetische Schicht sowie zumindest eine weitere Schicht aufweist, die aus einer im visuellen Spektralbereich teildurchlässigen Schicht besteht. Diese teildurchlässige Schicht besteht aus zwei Lackschichten, die jedoch nicht zum Schutz des Trägers dienen.

Aus DE 101 24 630 A1 sind bedruckte Wertpapiere bekannt, die auf mindestens einer Seite mit einer Schutzschicht ausgestattet sind, die durch einen Mattlack gebildet wird. Im Bereich des Sicherheitselements ist diese Schutzlackschicht unterbrochen, wobei das Sicherheitselement gegebenenfalls mit einer Glanzlackschicht versehen ist.

Der Erfindung liegt daher die Aufgabe zugrunde, ein Sicherheitspapier und ein Verfahren zu seiner Herstellung anzugeben, das die Nachteile des Standes der Technik vermeidet. Insbesondere soll das Sicherheitspapier eine längere Lebensdauer durch gute Schmutzabweisung und hohe Beständigkeit gegen das Eindringen von Flüssigkeit aufweisen.

Diese Aufgabe wird durch das Sicherheitspapier mit den Merkmalen des Hauptanspruchs gelöst. Ein Wertdokument und ein Verfahren zur Herstellung eines Sicherheitspapiers sind Gegenstand der nebengeordneten Ansprüche. Vorteilhafte Weiterbildungen der Erfindung sind Gegenstand der Unteransprüche.

Gemäß der Erfindung umfasst die Schutzschicht zumindest zwei Lackschichten, wobei eine erste untere Lackschicht durch eine auf das Substrat aufgebrachte, physikalisch trocknende Lackschicht gebildet ist, die Kontakt zum darunter liegenden Substrat herstellt und dessen Poren schließt, und wobei eine zweite obere Lackschicht vorliegt, die das Substrat vor physikalischen und chemischen Einflüssen schützt und einen guten Schutz gegen das Eindringen von Flüssigkeiten und Tintenpenetration gewährleistet.

Der Erfindung liegt die Erkenntnis zugrunde, dass die vorteilhaften Eigenschaften strahlungshärtender Lacke auch für Sicherheitspapiere genutzt werden können, wenn die Vertiefungen, Unebenheiten und Poren der Substrate zuvor durch eine physikalisch trocknende Lackschicht geschlossen werden. Strahlungshärtende und insbesondere UV-trocknende Lacke (im Folgenden "UV-Lack") haben den Nachteil, dass in der Regel nach der Strahlungshärtung in Abhängigkeit von der Substratqualität, der Strahlungsleistung, dem Initiatorsystem und dem Monomersystem Restmonomere und freie Photoinitiatoren als sehr reaktive Komponenten in den Vertiefungen und Poren des Substrats zurückbleiben (UV: Ultraviolett).

Dieses Problem tritt verstärkt dann auf, wenn der UV-Lack in einen Papierfaserverbund etwa eines Sicherheitspapiers eindringt. Eine vollständige Polymerisation des UV-Lacks ist dann nicht mehr möglich. Es wurde nun gefunden, dass die positiven Eigenschaften der UV-Lackierung für Sicherheitspapiere voll genutzt werden können, wenn eine Kombinationsbeschichtung aus zumindest zwei Lackschichten eingesetzt wird, bei der eine untere Lackschicht den Kontakt zum Substrat herstellt und dessen Poren schließt, und bei der als obere Lackschicht eine das Substrat vor physikalischen und chemischen Einflüssen schützende Schicht aufgebracht wird.

Das flächige Substrat des Sicherheitspapiers ist insbesondere durch ein unbedrucktes oder bedrucktes Baumwollpapier gebildet. Das Baumwollpapier von Sicherheits- und Wertdokumenten, wie etwa Banknoten, besitzt eine hohe Porosität und Oberflächenrauigkeit mit mikroskopischen Vorsprüngen und Hohlräumen, in denen sich ohne den erfindungsgemäßen Einsatz einer unteren Lackschicht Restmonomere und Photoinitiatoren der strahlungshärtenden Lackschicht einlagern.

Die untere Lackschicht ist durch eine wasserbasierte Dispersionslackschicht gebildet. Sie wird zweckmäßig in einer solchen Schichtdicke auf dem Substrat aufgetragen, dass sie eine glatte und zusammenhängende Schicht auf dem Substrat bildet. Vorteilhafterweise ist die untere Lackschicht elastisch, so dass Rissbildungen in der Lackschicht durch mechanische Bewegungen oder Quellen der Faser, z.B. durch Feuchtigkeitsaufnahme, vermieden werden. Dies hat den Vorteil, dass die banknotentypische Haptik, also die Biegesteifigkeit und der Klang, bei Beanspruchung länger beibehalten wird. Dies wirkt sich insbesondere bei extremer klimatischer und mechanischer Beanspruchung positiv aus. Vorzugsweise umfassen die elastischen Lacke Polyurethansysteme, die dem Lack seine Elastizität verleihen. Es handelt sich um wasserbasierte Dispersionen aliphatischer Polyester-Polyurethane oder Acryl-Styrol-Polyurethane. Es versteht sich, dass die benötigte Beschichtungsmenge dabei unter anderem von dem verwendeten Lack, dem verwendeten Substratmaterial und dessen Rauigkeit und Porengröße und Porenanzahl abhängt.

Die obere Lackschicht ist eine strahlungshärtende und/ oder physikalisch trocknende Lackschicht und umfasst besonders bevorzugt Silikone und/oder Wachse zur Verbesserung der Schmutz abweisenden Eigenschaften. Insbesondere handelt es sich bei der strahlungshärtenden Lackschicht um eine UV-vernetzende Lackschicht (im Folgenden "UV-Lack"). Deren extrem hohe physikalische und chemische Beständigkeit erlaubt eine entsprechende qualitative Steigerung und Anpassung des Anforderungsprofils. Die höhere physikalische Beständigkeit bewirkt insbesondere eine hohe Scheuerfestigkeit und eine Verlängerung der Lebensdauer des Sicherheitspapiers. Durch die höhere chemische Beständigkeit stellt die Schutzschicht darüber hinaus eine langzeitbeständige, wirkungsvolle Barriere gegen Wasserdampf und Flüssigkeiten, wie Tinte, dar.

Zusätzlich bietet die Verwendung eines UV-Lacks eine Vielzahl von Möglichkeiten, die Haptik eines Sicherheitspapiers, insbesondere einer Banknote, gezielt zu beeinflussen. Die Einstellung der Parameter Sprödigkeit, Glanz und Glätte der obersten Schutzschicht erlaubt auf eine vielfältige Weise, direkten Einfluss auf die haptischen Eigenschaften des beschichteten Papiers, insbesondere auf dessen Biegesteifigkeit, Glätte und Klang zu nehmen. Die Zusammensetzung der UV- Lackschicht ist besonders in Bezug auf Sprödigkeit und Oberflächenspannung mit Vorteil so gewählt, dass eine vorbe-stimmte Haptik des Sicherheitspapiers, insbesondere eine vorbestimmte Glätte, Biegesteifigkeit und/oder ein vorbestimmter Klang, erzielt wird.

Außer radikalisch vernetzenden UV-Lacken kommen für die strahlungshärtende Lackschicht auch kationisch vernetzende Lacksysteme infrage. Bei der physikalisch trocknenden Schicht als obere Lackschicht handelt es sich alternativ um wasserbasierte Dispersionen, ohne Polyurethananteil, auf Acryl-Styrol-Basis.

Ebenso denkbar kann die obere Lackschicht einen Hybridlack enthalten, der sowohl physikalisch trocknende Bestandteile, wie einen wasserbasierten Dispersionslackanteil, als auch einen strahlungshärtenden Lackanteil enthält. Bei der Trocknung des Hybridlackes wird erst physikalisch, z.B. durch Wärme, der Wasseranteil entfernt und dann z.B. mittels UV-Strahlung der strahlungshärtende Lackanteil ausgehärtet. Der Hybridlack ist eine wässrige Dispersion auf Basis von aliphatischen Urethanacrylaten und geeigneten Monomeren bzw. reaktiven Oligomeren, nämlich Acrylaten mit Photoinitiatoren.

Bei einer bevorzugten Ausführungsform ist die obere Lackschicht direkt auf die untere Lackschicht aufgebracht. Alternativ kann zwischen der oberen und der unteren Lackschicht eine weitere Lackschicht aus wasserbasiertem Dispersionslack vorgesehen sein.

Die Lackschichten der Schutzschicht sind in ihren Haftungseigenschaften zweckmäßig so aufeinander abgestimmt, dass sie einen hochwiderstandsfähigen Verbund bilden. Insbesondere ist, wenn die obere Lackschicht direkt auf die untere Lackschicht aufgebracht ist, die Zusammensetzung der unte-ren Lackschicht so gewählt, dass eine optimale Haftung des anschließend aufgebrachten strahlungshärtenden Lacks gewährleistet ist. In einer vorteilhaften Ausgestaltung wird eine Optimierung der Benetzbarkeit der unteren Lackschicht durch eine Herabsetzung der Glasübergangstemperatur des Lacksystems erreicht. Dadurch wird sowohl eine höhere Adhäsion als auch eine verbesserte Haftvermittlung bewirkt.

Nach weiteren zweckmäßigen Ausführungsformen ist die obere Lackschicht oder die untere Lackschicht transparent und farblos. Insbesondere wenn ein bedrucktes Substrat möglichst gut sichtbar bleiben soll, können auch beide Lackschichten mit Vorteil transparent und farblos ausgebildet sein. Die Schutzwirkung und die Einstellbarkeit der Haptik des Sicherheitspapiers bleiben dabei in vollem Umfang erhalten. Es ist aber auch möglich, zumindest eine der Lackschichten einzufärben. Dadurch kann das Wertdokument in vorteilhafter Weise mit einer leichten Farbtönung versehen werden, ohne unterschiedliche Substratmaterialien bevorraten zu müssen.

Nach einer anderen vorteilhaften Ausführungsform weist zumindest die obere Lackschicht eine antibakterielle Fungizid-Ausrüstung auf.

Es hat sich weiter als vorteilhaft herausgestellt, wenn die untere Lackschicht in einem Beschichtungsgewicht von 1 bis 6 g/m², bevorzugt von 2 bis 4 g/m² auf dem Substrat vorliegt. Dies entspricht für den bevorzugten Bereich einer Menge von ca. 5 bis 10 g/m² in ungetrocknetem, nassen Zustand (z.b. wässriger Dispersionslack mit 40 % Festkörperanteil). In jedem Fall müssen die Schichtdicken ausreichen, um die unregelmäßigen Vertiefungen und Poren des flächigen Substrats zu schließen. Für die obere Lackschicht genügt es, wenn sie mit einem etwas geringeren Beschichtungsgewicht von 0,5 bis 3 g/m², bevorzugt von 1 bis 2 g/m², auf dem Substrat vorliegt. Dies entspricht für den bevorzugten Bereich im unvernetzten Zustand einer Menge von ca.1 bis 2 g/m², da UV-Systeme so genannte "100%-Systeme" sind (100 % Festkörperanteil). Bei Oberflächen, die durch einen vorhergehenden Stichtiefdruck bereits geglättet und/ oder verdichtet wurden, liegen die Werte dabei eher im unteren, bei Rohpapier oder den Rückseiten von Stichtiefdruckseiten eher im oberen Bereich.

Gemäß einer zweckmäßigen Weiterbildung ist das Substrat mit Zeichen oder Mustern bedruckt und die Schutzschicht wird auf das bedruckte Substrat aufgebracht. Dadurch wird auch der Aufdruck geschützt. Die Schutzschicht kann auch Aussparungen, beispielsweise in Form von Zeichen oder Mustern, enthalten, in die optisch variable Elemente oder andere Sicherheitselemente eingebracht sind oder zu einem späteren Zeitpunkt eingebracht werden.

Nach einer weiteren bevorzugten Ausführungsform ist die Schutzschicht vollflächig auf dem Substrat aufgebracht. Es kann ebenfalls, wie beispielsweise bei einer Banknote, zweckmäßig sein, wenn das flächige Substrat des Sicherheitspapiers auf seinen beiden Hauptflächen mit der Schmutz abweisenden Schutzschicht versehen ist.

Die Erfindung enthält auch ein Wertdokument, wie eine Banknote, einen Gutschein, eine Urkunde, einen Pass, ein Ausweisdokument oder dergleichen, das ein Sicherheitspapier der beschriebenen Art aufweist.

Zur Herstellung eines Sicherheitspapiers der geschilderten Art wird in einem Schritt a) ein flächiges Substrat bereitgestellt und in einem Schritt b) eine Schmutz abweisende Schutzschicht auf das Substrat aufgebracht. Dabei wird die Schutzschicht aufgebracht, indem zunächst in einem Schritt b₁) als untere Schicht der Schutzschicht eine physikalisch trocknende Lackschicht auf das Substrat aufgebracht wird, um Kontakt zum darunter liegenden Substrat herzustellen und dessen Poren zu schließen, und in einem Schritt b₂) als obere Schicht der Schutzschicht eine Lackschicht aufgebracht wird, die das Substrat vor physikalischen und chemischen Einflüssen schützt.

Sofern eine "Nass-in-nass"-Aufbringung der beiden Lackschichten nicht möglich ist, wird die untere Lackschicht getrocknet bevor die obere Lackschicht aufgebracht wird. Die Trocknung kann einfach während einer ausreichend langen Wartezeit erfolgen, beispielsweise während des Transports eines Bogens über eine ausreichend lange Transportstrecke. In Hinblick auf eine schnelle Lackierung ist es unter produktionstechnischen und ökonomischen Aspekten sinnvoll, die physikalische Trocknung durch zusätzliche Maßnahmen zu beschleunigen. Dafür werden bevorzugt Trockner eingesetzt, die ein Heißluftgebläse und/ oder einen Infrarotstrahler aufweisen.

Die Erfindung bietet besonders große Vorteile, wenn als flächiges Substrat ein bedrucktes oder unbedrucktes Baumwollpapier bereitgestellt wird.

Nach einer bevorzugten Ausführungsform wird vor dem Aufbringen der Schutzschicht ein Druckbild auf das Substrat aufgedruckt. Alternativ oder zusätzlich kann nach dem Aufbringen der unteren Lackschicht auf das Substrat ein Druckbild auf die untere Lackschicht aufgedruckt werden. Die obere Lackschicht wird dann auf die untere Lackschicht und auf das typischerweise nicht vollflächige Druckbild aufgebracht. Selbstverständlich ist es auch denkbar, dass auch die obere Lackschicht bedruckt wird.

Die untere, die obere, oder beide Lackschichten werden mit Vorteil mit einem Flexodruckverfahren aufgebracht. Dabei werden die Lackschichten zweckmäßig in einer Beschichtungsmenge von 1 bis 8 g/m² aufgebracht. Bei einer anderen vorteilhaften Ausführung werden die untere, die obere, oder beide Lackschichten mit einem Siebdruckverfahren aufgebracht. In diesem Fall werden die Lackschichten zweckmäßig in einer Beschichtungsmenge von 5 bis 15 g/m² aufgebracht. Nach noch einer weiteren Variante der Erfindung ist vorgesehen, dass die untere und/ oder die obere Lackschicht im Offsetdruckverfahren, im Trockenoffset oder im indirekten Hochdruckverfahren aufgebracht wird.

Gemäß einer besonders bevorzugten Ausführungsform wird als flächiges Substrat in Schritt a) ein Wertpapierbogen bereitgestellt, der eine Vielzahl von Einzelnutzen umfasst, für welche die Schritte b), b₁) und b₂) gleichzeitig durchgeführt werden. Die untere und obere Lackschicht werden mit besonderem Vorteil in einer Bogen-Lackiermaschine inline, d.h. in einem Durchlauf, auf das Substrat aufgebracht.

Die Vorrichtung zur Durchführung des geschilderten Verfahrens umfasst vorzugsweise ein erstes Lackmodul zum Aufbringen der unteren, physikalisch trocknenden Lackschicht auf das Substrat, einen Zwischentrockner zum Trocknen der unteren Lackschicht, ein zweites Lackmodul zum Aufbringen der oberen Lackschicht und einen Endtrockner zum Härten und/ oder Trocknen der oberen Lackschicht.

Zur Sicherstellung gleich bleibender Schichtdicken ist das erste und/ oder zweite Lackmodul durch ein Flexodruckwerk mit Kammerrakel, Rasterwalze und Druckformzylinder gebildet. Die Rasterwalze weist dabei mit Vorteil kleine Näpfchen auf, über deren Volumen und/oder Dichte die Lackauftragsmenge bestimmt wird. Die Kammerrakel liegt an der Rasterwalze an, befüllt die Näpfchen und rakelt überschüssigen Lack gleichzeitig ab. Die Rasterwalze übergibt den Lack an den Druckformzylinder, der bevorzugt durch ein Gummituch gebildet ist. Das Gummituch übergibt den Lack schließlich an das flächige Substrat, insbesondere einen Papierbogen oder eine Papierbahn.

Weiter ist bevorzugt eine Lackaufbereitungseinrichtung zur Einstellung der Viskosität des Lacks und der Vernetzerkonzentration vorgesehen. Für Lacke mit strahlungshärtenden Komponenten weist die Lackaufbereitungseinrichtung zweckmäßig eine Temperiereinrichtung zur Einstellung der Viskosität und des Fließverhaltens des Lacks auf. Da es somit nur zwei Einflussgrößen für die Lackauftragsmenge gibt, nämlich das Näpfchenvolumen bzw. das Schöpfvolumen und die Viskosität des Lacks, kann mit einem derartigen Flexodruckwerk mit Kammerrakel ein Lackierverfahren verwirklicht werden, mit dem reproduzierbar und über einen sehr langen Zeitraum auf dem ganzen Bogen ein gleichmäßiger, homogener und geschlossener Lackfilm aufgebracht werden kann.

Der Zwischentrockner ist vorteilhaft ein steuerbarer IR-Heißluft-Kombinationstrockner (IR: Infrarot). Ebenso ist es zweckmäßig, wenn im Zwischentrockener zwei Trocknermodule verwendet werden, so dass auch bei hoher Geschwindigkeit eine ausreichende Trocknung sichergestellt ist. Der Endtrockner weist vorzugsweise leistungsgesteuerte UV-Trockenmodule auf, die auf die zur Härtung der oberen Lackschicht benötigte Wellenlänge und die Schichtdicke derselben abgestimmt sind.

### Beispiel 1

Mittels Flexodruck wird die untere elastische Lackschicht mit einer 20 ccm/m² Walze im Lackwerk 1 in einer Auftragsmenge von ca. 2,0 g/m² trocken auf ein Baumwollpapier aufgetragen. Bei dem elastischen Lack handelt es sich um eine wässrige Dispersion auf Acryl-Styrol-Polyurethan-Basis (Bezeichnung: L51073 der Firma Pröll).

Die obere, zweite Lacksicht wird im Lackwerk 2 mit einer 9 ccm/m²-Walze in einer Auftragsmenge von ca. 1,8 g/m² trocken über der ersten Lackschicht aufgetragen. Bei dem zweiten Lack handelt es sich um einen UV-Lack (Bezeichnung: UV L50733 + UV L50734, Mischungsverhältnis 3 : 2 der Firma Pröll).

### Beispiel 2

Die zweilagige Beschichtung wird wie unter Beispiel 1 beschrieben hergestellt, mit Ausnahme, dass im Lackwerk 2 eine 20 ccm/m²-Walze eingesetzt wird und der Lack in einer Auftragsmenge von ca. 2,0 g/m² trocken aufgetragen wird. Bei dem zweiten Lack handelt es sich um einen Hybrid-Lack (Bezeichnung: L50807 + L50806, Mischungsverhältnis 1 : 1 der Firma Pröll).

### Beispiel 3

Mittels Flexodruck wird die untere elastische Lackschicht mit einer 13 ccm/m²-Walze in Lackwerk 1 in einer Auftragsmenge von ca. 1,3 g/m² trocken auf ein Baumwollpapier aufgetragen. Bei dem elastischen Lack handelt es sich um eine wässrige Dispersion auf Acryl-Styrol-Polyurethan-Basis (Bezeichnung L51073 der Firma Pröll). Die obere zweite Lackschicht wird im Lackwerk 2 mit einer 13 ccm/m²-Walze in einer Auftragsmenge von ca. 1,3 g/m² trocken über der ersten Lackschicht aufgetragen. Bei dem zweiten Lack handelt es sich um eine wässrige Dispersion auf Acryl-Styrol-Basis.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet.

Es zeigen:
- Fig. 1: einen Ausschnitt aus einem Querschnitt durch eine Banknote mit einer zweischichtigen Schutzschicht nach einem Ausfüh- rungsbeispiel der Erfindung,
- Fig. 2: den Schichtaufbau der Banknote von Fig.1 in schematischer Darstellung,
- Fig. 3 und 4: den Schichtaufbau weiterer Ausgestaltungen von Banknoten nach Ausführungsbeispielen der Erfindung, und
- Fig. 5: eine schematische Darstellung einer Bogen-Lackieranlage zur Ausführung der Erfindung.

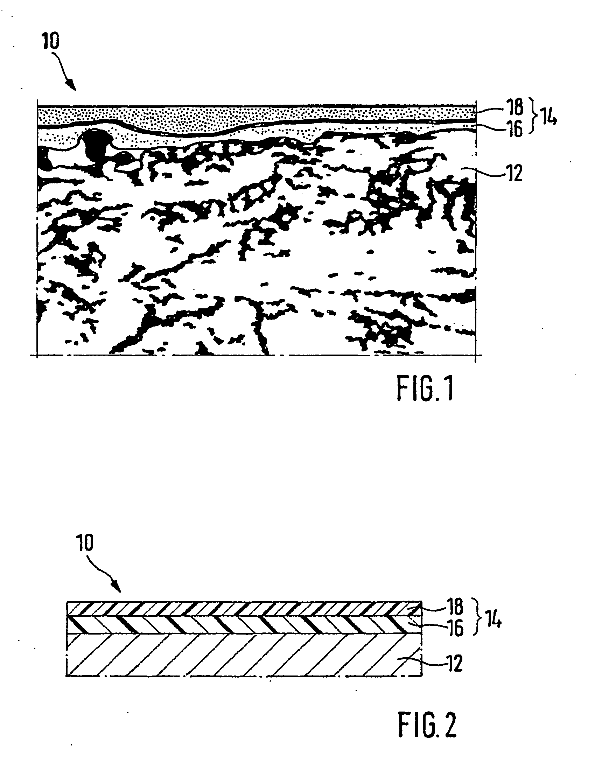

Figuren 1 und 2 zeigen den Aufbau einer Banknote 10 mit einer zweischichtigen Schutzschicht 14 nach einem Ausführungsbeispiel der Erfindung im Querschnitt. Die auf dem Papierfaserverbund 12 des Baumwollpapiers aufgebrachte Schutzschicht 14 enthält eine untere Lackschicht 16 aus einem wasserbasierten Dispersionslack und eine auf diesem aufgebrachte obere Lackschicht 18 aus einem UV-härtenden Lack.

Die untere Lackschicht 16 stellt den nötigen Kontakt zum Papierfaserverbund 12 her und schließt gleichzeitig dessen Kapillaren. Die Lackschicht 16 ist in einer solchen Beschichtungsmenge aufgetragen, dass sie eine glatte und geschlossene Oberfläche bildet, die eine optimale Haftung des nachfolgend aufgebrachten UV-Lacks gewährleistet.

Die Zusammensetzung des UV-Lacks 18 ist so gewählt, dass die gewünschten haptischen und Schmutz abweisenden Eigenschaften der Banknote erreicht werden. Insbesondere wird die Sprödigkeit des UV-Lacks so eingestellt, dass eine gewünschte Haptik und ein gewünschter Klang der Banknote resultieren. Die Schmutz abweisenden Eigenschaften der Banknote werden im Wesentlichen durch die Wahl der Oberflächenspannung des UV-Lacks bestimmt. Die hohe physikalische und chemische Beständigkeit des UV-Lacks verleiht der Banknote 10 eine hohe Scheuerfestigkeit und eine große Widerstandfähigkeit gegen die Penetration von Wasserdampf und Flüssigkeiten. Durch die Variabilität, die bei der Wahl der Materialparameter des UV-Lacks besteht, lassen sich auch neue, bisher im Wertpapierdruck kaum erreichbare Eigenschaften in Bezug auf Haptik und Klang der Banknoten verwirklichen.

Im Ausführungsbeispiel der Figuren 1 und 2 ist der wasserbasierte Dispersionslack 14 in einem Beschichtungsgewicht von 3 g/m², der UV-Lack 18 in einem Beschichtungsgewicht von 1,5 g/m² auf das Baumwollpapier 12 aufgebracht. Der wasserbasierte Dispersionslack 14 weist im Ausführungsbeispiel ein Styrol-Acryl-Polymer und der UV-Lack 18 ein Acrylatsystem auf.

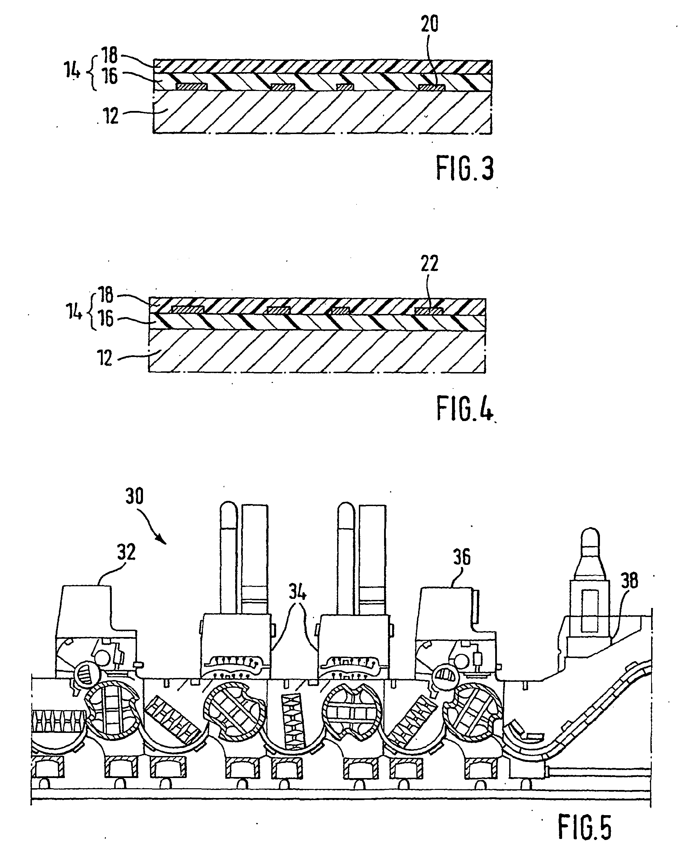

Während die Darstellung der Figuren 1 und 2 die Schutzschicht 14 auf einem unbedruckten Papier zeigen, versteht es sich, dass das Substrat 12 auch bereits bedruckt sein kann. Dies ist in der Fig. 3 schematisch dargestellt. Dort ist auf dem Baumwollpapier 12 einer Banknote 10 ein Druckbild 20 aus Zeichen oder Mustern aufgedruckt und die Schutzschicht 14 ist auf das Druckbild 20 und das Substrat 12 aufgebracht. Alternativ oder zusätzlich kann ein Druckbild 22 auch zwischen der unteren Lackschicht 14 und der oberen UV-Lackschicht 16 angeordnet sein, wie in der Darstellung der Fig. 4 gezeigt.

Fig. 5 zeigt eine Bogen-Lackiermaschine 30 für das Aufbringen einer erfindungsgemäßen Kombinationsbeschichtung aus zwei Lackschichten. Die Bogen-Lackiermaschine 30 umfasst eine nicht dargestellte Lackaufbereitungseinrichtung, zwei Lackwerke 32 und 36, einen Zwischentrockner 34 und einen Endtrockner 38.

Die Lackaufbereitungseinrichtung dient der Einstellung der Viskosität des Lacks und der Vernetzerkonzentration. Eine Temperiereinrichtung stellt die Viskosität und das Fließverhalten des UV-Lacks ein.

Das erste und zweite Lackwerk 32 bzw. 36 ist jeweils durch ein modernes Flexodruckwerk mit Kammerrakel, Rasterwalze und Druckformzylinder gebildet. Die Rasterwalze weist winzige Näpfchen auf, über deren Volumen die Lackauftragsmenge bestimmt wird. Die Kammerrakel liegt an der Rasterwalze an, befüllt die Näpfchen und rakelt überschüssigen Lack gleichzeitig ab. Die Rasterwalze übergibt den Lack an den Druckformzylinder, der im Ausführungsbeispiel durch ein Gummituch gebildet ist. Das Gummituch übergibt den Lack schließlich an die zu beschichtenden Wertpapierbogen.

Die Schutzschicht kann auch auf eine kontinuierliche Bahn aufgebracht werden. Dies wird insbesondere für unbedruckte Papierbahnen bevorzugt.

Der als Zwischentrockner eingesetzte IR-Heißluft-Kombinationstrockner 34 weist zwei Trocknermodule auf, um auch bei einer hohen Lackiergeschwindigkeit eine ausreichende Trocknung sicherzustellen. Im Endtrockner 38 wird die UV-Lackschicht durch Bestrahlung mit intensivem UV-Licht gehärtet und zusätzlich die Schutzschicht mit Infrarotstrahlung und Heißluft getrocknet. Die Leistung und Wellenlänge der Trockenmodule des Endtrockners 38 wird dabei auf die benötigte Wellenlänge des UV-Lacks und auf die Schichtdicke auf dem Wertpapierbogen abgestimmt.

## Patentansprüche

1. Sicherheitspapier zur Herstellung von Wertdokumenten, wie Banknoten, Pässe, Ausweisdokumente oder dergleichen, mit einem flächigen Substrat (12), das zumindest teilweise mit einer Schmutz abweisenden Schutzschicht (14) zur Verlängerung der Lebensdauer und der Umlauffähigkeit versehen ist, wobei
die Schutzschicht (14) zumindest zwei Lackschichten (16, 18) umfasst, von denen eine erste untere Lackschicht (16) durch eine auf das Substrat (12) aufgebrachte, physikalisch trocknende Lackschicht gebildet ist, die Kontakt zum darunter liegenden Substrat (12) herstellt und dessen Poren schließt, und eine zweite obere Lackschicht (18) das Substrat (12) vor physikalischen und chemischen Einflüssen schützt,
die untere Lackschicht (16) auf einer wasserbasierten Dispersion aliphatischer Polyester-Polyurethane oder Acryl-Styrol-Polyurethane basiert, und
die obere Lackschicht (18) durch eine der folgenden Schichten a), b) oder c) gebildet ist:
a) eine strahlungshärtende UV-vernetzte Lackschicht;
b) eine physikalisch trocknende, wasserbasierte Dispersionslackschicht auf Acryl-Styrol-Basis ohne Polyurethananteil;
c) eine Hybridlackschicht, die sowohl physikalisch trocknende Bestandteile als auch einen strahlungshärtenden Lackanteil enthält und auf wässrigen Dispersionen auf Basis von aliphatischen Urethanacrylaten und Acrylaten mit Photoinitiatoren beruht.

2. Sicherheitspapier nach Anspruch 1, bei dem das Substrat durch ein unbedrucktes (12) oder bedrucktes (12, 20) Baumwollpapier gebildet ist.

3. Sicherheitspapier nach Anspruch 1 oder 2, bei dem die untere Lackschicht (16) eine glatte und zusammenhängende Schicht auf dem Substrat bildet.

4. Sicherheitspapier nach wenigstens einem der Ansprüche 1 bis 3, bei dem die erste untere Lackschicht elastisch ist.

5. Sicherheitspapier nach einem der Ansprüche 1 bis 4, bei dem die zweite obere Lackschicht Silikone und/oder Wachs umfasst.

6. Sicherheitspapier nach Anspruch 5, bei dem die UV-vernetzte Lackschicht auf einem Acrylatsystem beruht.

7. Sicherheitspapier nach Anspruch 1, bei dem die Zusammensetzung der oberen Lackschicht (18) in Bezug auf Sprödigkeit und Oberflächenspannung gewählt ist, um eine vorbestimmte Haptik des Sicherheitspapiers, insbesondere eine vorbestimmte Glätte, Klang und/oder Biegesteifigkeit, zu erzielen.

8. Sicherheitspapier nach wenigstens einem der Ansprüche 1 bis 7, bei dem die obere Lackschicht (18) unmittelbar auf der unteren Lackschicht (16) angeordnet ist.

9. Sicherheitspapier nach einem der Ansprüche 1 bis 7, wobei zwischen der oberen (18) und der unteren (16) Lackschicht eine weitere Lackschicht aus wasserbasiertem Dispersionslack angeordnet ist.

10. Sicherheitspapier nach einem der Ansprüche 1 bis 9, bei dem die Lackschichten (16,18) der Schutzschicht in ihren Haftungseigenschaften so aufeinander abgestimmt sind, dass sie einen hochwiderstandsfähigen Verbund bilden.

11. Sicherheitspapier nach einem der Ansprüche 1 bis 10, bei dem die untere Lackschicht (16) zur Erhöhung der Adhäsion und Haftvermittlung eine niedrige Glasübergangstemperatur aufweist.

12. Sicherheitspapier nach einem der Ansprüche 1 bis 11, bei dem die obere (18) und/oder die untere (16) Lackschicht transparent und farblos ist.

13. Sicherheitspapier nach einem der Ansprüche 1 bis 12, bei dem die untere Lackschicht (16) in einem Beschichtungsgewicht von 1 bis 6 g/m², bevorzugt von 2 bis 4 g/m², auf dem Substrat (12) vorliegt, und die obere Lackschicht (18) in einem Beschichtungsgewicht von 0,5 bis 3 g/m², bevorzugt von 1 bis 2 g/m², auf dem Substrat (12) vorliegt.

14. Sicherheitspapier nach einem der Ansprüche 1 bis 13, wobei das Substrat (12, 20) mit Zeichen oder Mustern (20) bedruckt ist, und die Schutzschicht (14) auf das bedruckte Substrat (12, 20) aufgebracht ist und/oder die erste untere Lackschicht bedruckt ist, auf die die zweite obere Lackschicht aufgebracht ist, und/oder die zweite obere Lackschicht bedruckt ist.

15. Sicherheitspapier nach einem der Ansprüche 1 bis 14, wobei die Schutzschicht (14) mindestens eine Aussparung enthält, und in der Aussparung ein Sicherheitselement eingebracht ist.

16. Sicherheitspapier nach wenigstens einem der Ansprüche 1 bis 15, bei dem die Schutzschicht (14) vollflächig auf dem Substrat (12) aufgebracht ist.

17. Sicherheitspapier nach wenigstens einem der Ansprüche 1 bis 16, bei dem das flächige Substrat (12) auf seinen beiden Hauptflächen mit der Schmutz abweisenden Schutzschicht (14) versehen ist.

18. Wertdokument, wie eine Banknote, ein Pass, ein Ausweisdokument oder dergleichen, wobei das Wertdokument ein Sicherheitspapier nach wenigstens einem der Ansprüche 1 bis 17 aufweist.

19. Verfahren zur Herstellung eines Sicherheitspapiers insbesondere für ein Wertdokument, wie eine Banknote, ein Pass, ein Ausweisdokument oder dergleichen, mit den folgenden Schritten:
a) Bereitstellen eines flächigen Substrats; und
b) Aufbringen einer Schmutz abweisenden Schutzschicht auf das Substrat, wobei die Schutzschicht aufgebracht wird, indem
b1) als eine untere Schicht der Schutzschicht eine physikalisch trocknende Lackschicht auf das Substrat aufgebracht wird, um Kontakt zum darunter liegenden Substrat herzustellen und dessen Poren zu schließen, wobei die untere Lackschicht auf einer wasserbasierten Dispersion aliphatischer Polyester-Polyurethane oder Acryl-Styrol-Polyurethane basiert; und
b₂) eine obere Schicht der Schutzschicht aufgebracht wird, die das Substrat vor physikalischen und chemischen Einflüssen schützt, wobei die obere Lackschicht (18) durch eine der folgenden Schichten a), b) oder c) gebildet ist:
a) eine strahlungshärtende UV-vernetzte Lackschicht;
b) eine physikalisch trocknende, wasserbasierte Dispersionslackschicht auf Acryl-Styrol-Basis ohne Polyurethananteil;
c) eine Hybridlackschicht, die sowohl physikalisch trocknende Bestandteile als auch einen strahlungshärtenden Lackanteil enthält und auf wässrigen Dispersionen auf Basis von aliphatischen Urethanacrylaten und Acrylaten mit Photoinitiatoren beruht.

20. Verfahren nach Anspruch 19, wobei die untere Lackschicht in einer Beschichtungsmenge aufgetragen wird, die die Poren des Substrats schließt und eine glatte und geschlossene Oberfläche auf dem Substrat bildet.

21. Verfahren nach einem der Ansprüche 19 oder 20, wobei die untere Lackschicht in einer Menge von 2,5 bis 15 g/m², bevorzugt von 5 bis 10 g/m², auf das Substrat aufgebracht wird (Nassgewicht).

## Claims

1. A security paper for producing value documents, such as bank notes, passports, identification documents or the like, having a flat substrate (12) provided at least partly with a dirt-repellent protective layer (14) for extending the life time and fitness for circulation, wherein
the protective layer (14) comprises at least two lacquer layers (16, 18), of which a first lower lacquer layer (16) is formed by a physically drying lacquer layer applied to the substrate (12), which makes contact with the substrate (12) therebelow and closes its pores, and a second upper lacquer layer (18) protects the substrate (12) from physical and chemical influences,
the lower lacquer layer (16) is based on a water-based dispersion of aliphatic polyester polyurethanes or acrylic-styrene polyurethanes, and
the upper lacquer layer (18) is formed by one of the following layers a), b) or c):
a) a radiation-curing, UV-crosslinked lacquer layer;
b) a physically drying, water-based dispersion lacquer layer on an acrylic-styrene base without a polyurethane component;
c) a hybrid lacquer layer which contains both physically drying constituents and a radiation-curing lacquer component and is based on aqueous dispersions based on aliphatic urethane acrylates and acrylates with photoinitiators.

2. The security paper according to claim 1, wherein the substrate is formed by an unprinted (12) or printed (12, 20) cotton paper.

3. The security paper according to claim 1 or 2, wherein the lower lacquer layer (16) forms a smooth and contiguous layer on the substrate.

4. The security paper according to at least one of claims 1 to 3, wherein the first lower lacquer layer is elastic.

5. The security paper according to any of claims 1 to 4, wherein the first lower lacquer layer comprises silicones and/or wax.

6. The security paper according to claim 5, wherein the UV-crosslinked lacquer layer is based on an acrylate system.

7. The security paper according to claim 1, wherein the composition of the upper lacquer layer (18) is selected with respect to brittleness and surface tension so as to obtain a predetermined haptics of the security paper, in particular a predetermined smoothness, sound and/or flexural stiffness.

8. The security paper according to at least one of claims 1 to 7, wherein the upper lacquer layer (18) is arranged directly on the lower lacquer layer (16).

9. The security paper according to any of claims 1 to 7, wherein a further lacquer layer of water-based dispersion lacquer is arranged between the upper (18) and lower (16) lacquer layers.

10. The security paper according to any of claims 1 to 9, wherein the lacquer layers (16, 18) of the protective layer are coordinated with each other in their adhesion properties so as to form a highly resistant composite.

11. The security paper according to any of claims 1 to 10, wherein the lower lacquer layer (16) has a low glass transition temperature to increase the adhesion and adhesion promotion.

12. The security paper according to any of claims 1 to 11, wherein the upper (18) and/or the lower (16) lacquer layer is transparent and colorless.

13. The security paper according to any of claims 1 to 12, wherein the lower lacquer layer (16) is present on the substrate (12) in a coating weight of 1 to 6 g/m², preferably 2 to 4 g/m², and the upper lacquer layer (18) is present on the substrate (12) in a coating weight of 0.5 to 3 g/m², preferably 1 to 2 g/m².

14. The security paper according to any of claims 1 to 13, wherein the substrate (12, 20) is printed with characters or patterns (20), and the protective layer (14) is applied to the printed substrate (12, 20) and/or the first lower lacquer layer is printed to which the second upper lacquer layer is applied, and/or the second upper lacquer layer is printed.

15. The security paper according to any of claims 1 to 14, wherein the protective layer (14) contains at least one gap, and the gap has a security element incorporated therein.

16. The security paper according to any of claims 1 to 15, wherein the protective layer (14) is applied to the substrate (12) over the entire surface.

17. The security paper according to at least one of claims 1 to 16, wherein the flat substrate (12) is provided on its two main faces with the dirt-repellent protective layer (14).

18. A value document, such as a bank note, passport, identification document or the like, wherein the value document has a security paper according to at least one of claims 1 to 17.

19. A method for producing a security paper in particular for a value document, such as a bank note, passport, identification document or the like, having the following steps:
a) supplying a flat substrate; and
b) applying a dirt-repellent protective layer to the substrate, the protective layer being applied by
b₁) applying a physically drying lacquer layer to the substrate as a lower layer of the protective layer, to make contact with the substrate therebelow and close its pores, the lower lacquer layer being based on a water-based dispersion of aliphatic polyester polyurethanes or acrylic-styrene polyurethanes; and
b₂) applying an upper layer of the protective layer to protect the substrate from physical and chemical influences, the upper lacquer layer (18) being formed by one of the following layers a), b) or c):
a) a radiation-curing UV-crosslinked lacquer layer;
b) a physically drying, water-based dispersion lacquer layer on an acrylic-styrene base without a polyurethane component;
c) a hybrid lacquer layer which contains both physically drying constituents and a radiation-curing lacquer component and is based on aqueous dispersions based on aliphatic urethane acrylates and acrylates with photoinitiators.

20. The method according to claim 19, wherein the lower lacquer layer is applied in an amount of coating that closes the pores of the substrate and forms a smooth and closed surface on the substrate.

21. The method according to either of claims 19 to 20, wherein the lower lacquer layer is applied to the substrate in an amount of 2.5 to 15 g/m², preferably 5 to 10 g/m² (wet weight).

## Revendications

1. Papier de sécurité pour la fabrication de documents de valeur tels que billets de banque, passeports, documents d'identité ou papiers similaires, comportant un substrat plan (12) qui, pour en augmenter la durée de vie et l'aptitude à la circulation, est pourvu au moins partiellement d'une couche protectrice (14) résistante aux salissures,
la couche protectrice (14) comprenant au moins deux couches de vernis (16, 18), dont une première couche inférieure de vernis (16) est constituée par une couche de vernis à séchage physique qui est appliquée sur le substrat (12) et qui établit le contact avec le substrat (12) se trouvant en dessous et ferme ses pores, et dont une seconde couche supérieure de vernis (18) protège le substrat (12) vis-à-vis d'influences physiques et chimiques.
la couche inférieure de vernis (16) étant basée sur une dispersion aqueuse de polyuréthanes polyester aliphatiques ou de polyuréthanes styrène acrylique, et
la couche supérieure de vernis (18) étant constituée par une des couches suivantes a), b) ou c):
a) une couche de vernis réticulée aux UV et durcissant par rayonnement ;
b) une couche de vernis de dispersion aqueuse à séchage physique, à base de styrène acrylique et ne contenant pas de polyuréthane ;
c) une couche de vernis hybride contenant non seulement des composants à séchage physique, mais aussi une part de vernis durcissant par rayonnement, et qui est basée sur des dispersions aqueuses à base d'acrylates d'uréthane aliphatiques et d'acrylates avec des photo-initiateurs.

2. Papier de sécurité selon la revendication 1, dans lequel le substrat est constitué par un papier de coton non imprimé (12) ou imprimé (12, 20).

3. Papier de sécurité selon la revendication 1 ou 2, dans lequel la couche inférieure de vernis (16) constitue sur le substrat une couche lisse et d'un seul tenant.

4. Papier de sécurité selon au moins une des revendications de 1 à 3, dans lequel la première couche inférieure de vernis est élastique.

5. Papier de sécurité selon au moins une des revendications de 1 à 4, dans lequel la seconde couche supérieure de vernis comprend des silicones et/ou de la cire.

6. Papier de sécurité selon la revendication 5, dans lequel la couche de vernis réticulée aux UV consiste en un système acrylate.

7. Papier de sécurité selon la revendication 1, dans lequel la composition de la couche supérieure de vernis (18) est sélectionnée selon des critères de friabilité et de tension superficielle afin d'obtenir une haptique prédéterminée du papier de sécurité, notamment un lissé, une sonorité et/ou une rigidité à la flexion prédéterminés.

8. Papier de sécurité selon au moins une des revendications de 1 à 7, dans lequel la couche supérieure de vernis (18) est disposée directement sur la couche inférieure de vernis (16).

9. Papier de sécurité selon une des revendications de 1 à 7, une couche supplémentaire en vernis de dispersion aqueux étant disposée entre la couche supérieure (18) et la couche inférieure de vernis (16).

10. Papier de sécurité selon une des revendications de 1 à 9, dans lequel les couches de vernis (16, 18) de la couche protectrice sont accordées de telle manière entre elles quant à leurs propriétés d'adhérence qu'elles constituent un composite de grande robustesse.

11. Papier de sécurité selon une des revendications de 1 à 10, dans lequel, afin d'augmenter l'adhérence et l'adhésion, la couche inférieure de vernis (16) présente une faible température de transition vitreuse.

12. Papier de sécurité selon une des revendications de 1 à 11, dans lequel la couche supérieure (18) et/ou la couche inférieure de vernis (16) est transparente ou incolore.

13. Papier de sécurité selon une des revendications de 1 à 12, dans lequel la couche inférieure de vernis (16) se trouvant sur le substrat (12) présente un poids de revêtement de 1 à 6 g/m², de préférence de 2 à 4 g/m², et la couche supérieure de vernis (18) se trouvant sur le substrat (12) présente un poids de revêtement de 0,5 à 3 g/m², de préférence de 1 à 2 g/m².

14. Papier de sécurité selon une des revendications de 1 à 13, le substrat (12, 20) étant imprimé de signes et de motifs (20), et la couche protectrice (14) étant appliquée sur le substrat imprimé (12, 20) et/ou la première couche inférieure de vernis étant imprimée, sur laquelle la seconde couche supérieure de vernis est appliquée, et/ou la seconde couche supérieure de vernis étant imprimée.

15. Papier de sécurité selon une des revendications de 1 à 14, la couche protectrice (14) comportant au moins un évidement, et un élément de sécurité étant placé dans l'évidement.

16. Papier de sécurité selon au moins une des revendications de 1 à 15, dans lequel la couche protectrice (14) est appliquée à pleine surface sur le substrat (12).

17. Papier de sécurité selon au moins une des revendications de 1 à 16, dans lequel le substrat plan (12) est pourvu sur ses deux surfaces principales de la couche protectrice (14) résistante aux salissures.

18. Document de valeur, tel qu'un billet de banque, un passeport, un document d'identité ou papier similaire, le document de valeur comportant un papier de sécurité selon au moins une des revendications de 1 à 17.

19. Procédé de fabrication d'un papier de sécurité notamment pour un document de valeur tel qu'un billet de banque, un passeport, un document d'identité ou papier similaire, comprenant les étapes suivantes :
a) mise à disposition d'un substrat plan ; et
b) application d'une couche protectrice résistante aux salissures sur le substrat, l'application la couche protectrice consistant en ce que
b₁) c'est une couche de vernis à séchage physique qui est appliquée sur le substrat en tant qu'une couche inférieure de la couche protectrice, afin d'établir un contact avec le substrat se trouvant en dessous et de fermer ses pores, la couche inférieure de vernis étant basée sur une dispersion aqueuse de polyuréthanes polyester aliphatiques ou de polyuréthanes styrène acrylique; et
b₂) une couche supérieure de la couche protectrice est appliquée, qui protège le substrat vis-à-vis d'influences physiques et chimiques, la couche supérieure de vernis (18) étant constituée par une des couches suivantes a), b) ou c):
a) une couche de vernis réticulée aux UV et durcissant par rayonnement ;
b) une couche de vernis de dispersion aqueuse à séchage physique, à base de styrène acrylique et ne contenant pas de polyuréthane ;
c) une couche de vernis hybride contenant non seulement des composants à séchage physique, mais aussi une part de vernis durcissant par rayonnement, et qui est basée des dispersions aqueuses à base d'acrylates d'uréthane aliphatiques et d'acrylates avec des photo-initiateurs.

20. Procédé selon la revendication 19, la couche inférieure de vernis étant appliquée dans une quantité de revêtement qui ferme les pores du substrat et constitue une surface lisse et fermée sur le substrat.

21. Procédé selon une des revendications 19 ou 20, la couche inférieure de vernis étant appliquée sur le substrat dans une quantité de 2,5 à 15 g/m², de préférence de 5 à 10 g/m² (poids humide).
